# EUROPEAN PATENT APPLICATION

(11) **EP 1 675 324 A1**
(43) Date of publication of application: **28.06.2006**
(21) Application number: 05106664.5
(22) Date of filing: 20.07.2005
(51) Int. Cl.: H04L 12/56

(54) **Access control in a wireless communication network**

(30) Priority: 27.12.2004 JP 2004377331
(71) Applicant: KABUSHIKI KAISHA TOSHIBA, Tokyo 105-8001 (JP)
(72) Inventor: Honjo, Kazushi Int. Prop. Divn. Toshiba Corp., Tokyo 105-8001 (JP)
(74) Representative: Henkel, Feiler & Hänzel

(57) **Abstract**

According to one embodiment, a communication system comprises a server (7) to deliver streaming data, a relay unit (1) to relay the streaming data delivered from the server (7), a plurality of wireless communication terminals (2, 3, 4) adapted to receive the streaming data from the relay unit (1), the plurality of wireless communication terminals including a first wireless communication terminal (3) and a second wireless communication terminal (4), and a control unit (8) to detect that the delivery of the streaming data to the second wireless communication terminal (4) causes congestion in response to the second communication terminal (4) transmitting a request for the streaming data while the first wireless communication terminal (3) is receiving the streaming data, and to reduce a bit rate of the streaming data to be delivered to the first wireless communication terminal (3) when the congestion is caused by the delivery to the second wireless communication terminal (4) and a link speed between the relay unit (1) and the first wireless communication terminal (3) is slower than that between the relay unit (1) and the second wireless communication terminal (4).

## Description

One embodiment of the invention relates to a communication system, for example, having a communication path through a wireless LAN.

In recent years, for a wireless communication network, a technology to control the transmission order of transmission data in response to transmission speeds among wireless sections has been developed so as to maintain a quality of service (hereinafter "QoS") of the whole communication network. It is disclosed by, for example, Japanese Patent Application Publication (KOKAI) No. 2004-112780.

In a wireless communication network, the network features a basic service set (hereinafter "BSS"), which is configured by means of a server, a wireless access point and terminals. In such a communication network, a competition of streaming data to a delivery target is likely to occur, resulting from congestion if any terminal issues a new deliver request for reproducing the streaming data during a state that at least one terminal receives the streaming data.

In this case, it is conceivable that equipment in the communication network rejects the new deliver request for the streaming data so as to avoid the competition. However, if the equipment in the communication network rejects the new delivery request for the streaming data, some users might not receive the streaming data. In such a case, the QoS in the whole of the communication network is adversely affected.

An object of the invention is to provide a communication system capable of improving a data throughput by shortening delay time of data delivery when terminals issue delivery requests for data to a server in a wireless communication network.

According to an aspect of the present invention, there is provided a communication system, comprising a server to deliver streaming data, a relay unit to relay the streaming data delivered from the server, a plurality of wireless communication terminals adapted to receive the streaming data from the relay unit, the plurality of wireless communication terminals including a first wireless communication terminal and a second wireless communication terminal, and a control unit to detect that the delivery of the streaming data to the second wireless communication terminal causes congestion in response to the second communication terminal transmitting a request for the streaming data while the first wireless communication terminal is receiving the streaming data, and to reduce a bit rate of the streaming data to be delivered to the first wireless communication terminal when the congestion is caused by the delivery to the second wireless communication terminal and a link speed between the relay unit and the first wireless communication terminal is slower than that between the relay unit and the second wireless communication terminal.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary block diagram showing a configuration of a communication system according to an embodiment of the invention;
FIG. 2 is a block diagram showing an exemplary configuration of an inner circuit of a wireless control unit in the embodiment;
FIG. 3 is a block diagram showing an exemplary configuration of an inner circuit of a wireless terminal in the embodiment;
FIG. 4 is an exemplary diagram showing a frame sequence and a format of a wireless LAN in the embodiment;
FIG. 5 is an exemplary diagram of an input/output form of streaming data and a variety of signals among each unit of the communication system in the embodiment;
FIG. 6 is a flowchart showing an exemplary communication control processing conducted by a streaming server in the embodiment;
FIG. 7 is a flowchart showing an exemplary communication control processing conducted by a QoS control unit in the embodiment; and
FIG. 8 is an exemplary table showing a streaming quality in response to each treatment method when a delivery request for the streaming data is issued to the streaming server from a communication server in the embodiment.

Various embodiments according to the invention will be described hereinafter with reference to the accompanying drawings.

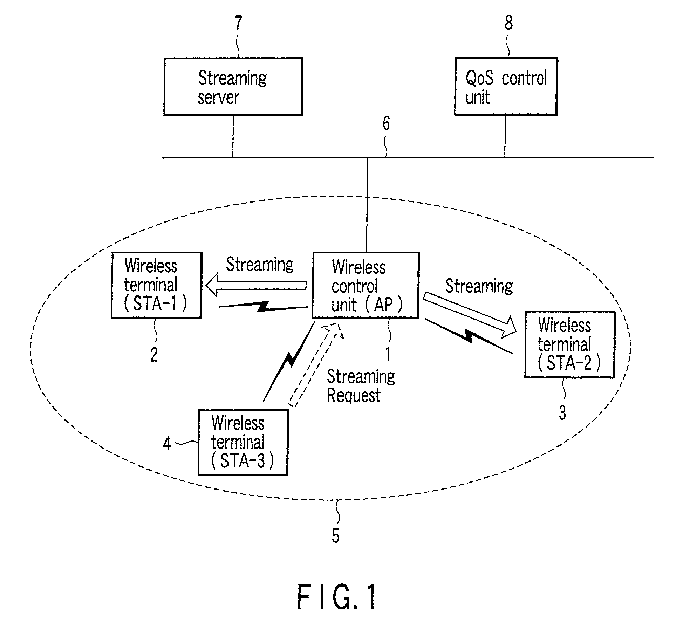

FIG. 1 is the exemplary block diagram showing a configuration of a wireless communication system according to one embodiment of the invention.

As shown in FIG. 1, the wireless communication system has a wireless control unit 1 which is an access point (also referred as "AP"), and wireless communication terminals 2, 3, 4 which are stations (also referred as "STAs").

In this wireless communication system, in a wireless zone 5 which is basic service set (also referred as "BSS") 5, the wireless control unit 1 and the wireless terminals 2, 3, 4 establish wireless communications with one another through, for example, a wireless LAN. A standard of the wireless LAN is, for example, the IEEE 802.11a.

The wireless control unit 1 is coupled to a streaming server 7 and a QoS control unit 8 via a LAN cable 6. The QoS means a communication quality of the whole of the communication network.

The streaming server 7 delivers, for example, streaming data such as audio data and/or video data to any of the wireless terminals 2, 3, 4 in response to delivery requests from the wireless terminals 2, 3, 4.

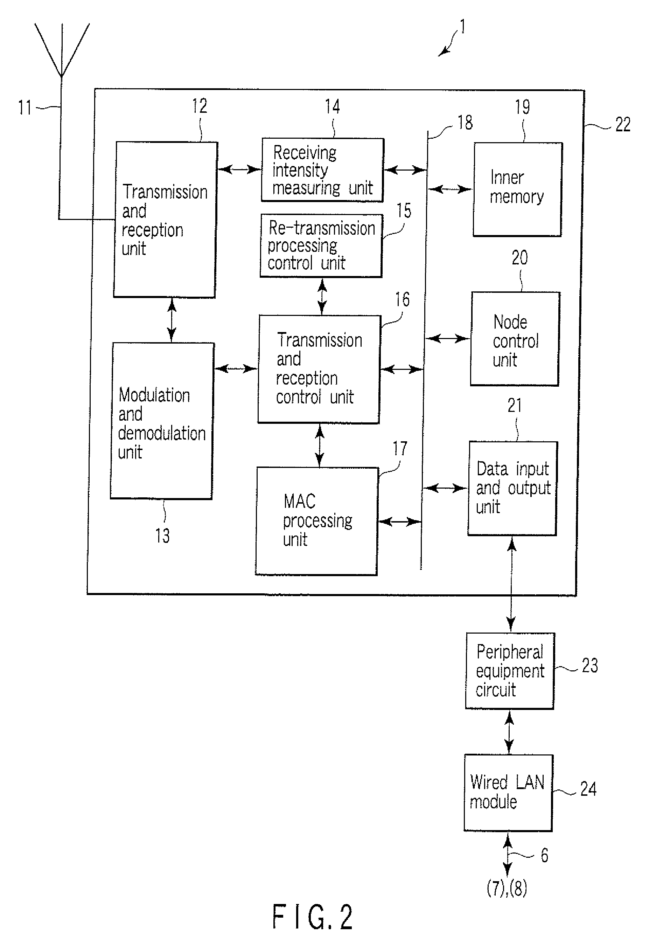

FIG. 2 is the block diagram showing an exemplary configuration of an inner circuit of the wireless control unit 1.

As shown in FIG. 2, the wireless control unit 1 of the wireless communication system has a wireless LAN module 22, a peripheral equipment circuit 23 and a wired LAN module 24.

The LAN module 22 comprises an antenna 11, a transmission and reception unit 12, a modulation and demodulation unit 13, a receiving intensity measurement unit 14, a re-transmission processing control unit 15, a transmission and reception control unit 16, a media access control (also referred as "MAC") processing unit 17, an inner bus 18, an inner memory 19, a node control unit 20 and a data input and output unit 21. The data input and output unit 21 is coupled to the peripheral equipment circuit 23. The peripheral equipment circuit 23 coupled to the wired LAN module 24. The wired LAN module 24 is coupled to the streaming server 7 and the QoS control unit 8 via the LAN cable 6 of Figure 1.

The transmission and reception unit 12 is coupled to the antenna 11, the modulation and demodulation unit 13, and the receiving intensity measurement unit 14. The transmission and reception control unit 16 is coupled to the modulation and demodulation unit 13, the re-transmission processing control unit 15 and the MAC processing unit 17.

The receiving intensity measurement unit 14, the transmission and reception control unit 16, the MAC processing unit 17, the inner memory 19, the node control unit 20 and the data input and output unit 21 are in communication with one another via the inner bus 18.

When the antenna 11 receives wireless signals from one or more of the wireless terminals 2, 3 or 4, the transmission and reception unit 12 tunes antenna to a selected frequency channel, and recovers signaling over the selected frequency. The data input and output unit 21 inputs and outputs signals to and from the streaming server 7 and the QoS control unit 8.

The transmission and reception unit 12 also conducts frequency conversion operations on signals intended for transmission to the wireless terminals 2, 3, 4. These signals are supplied from any of the data input and output unit 21, the streaming server 7 and the QoS control unit 8. The antenna 11 transmits the frequency converted (and wireless) signals to the wireless communication network.

The modulation and demodulation unit 13 conducts base band processing. The receiving intensity measurement unit 14 measures intensity of the signals input from the transmission and reception unit 12. The re-transmission processing control unit 15 controls for re-transmission of a transmission and reception frame of the wireless LAN if necessary. The MAC processing unit 17 identifies the kind of the foregoing transmission and reception frame, and detects and corrects an error thereof.

The transmission and reception control unit 16 controls operations of the modulation and demodulation unit 13, the re-transmission processing control unit 15 and the MAC processing unit 17. The transmission and reception control unit 16 conducts input and output of the data to be transmission and reception targets. The transmission and reception control unit 16 also has a transmission and reception frame buffer. The node control unit 20 controls each unit connected to the inner bus 18. The data input and output unit 21 is an interface to the peripheral equipment circuit 23.

The transmission and reception control unit 16 respectively determines the state of each communication path between wireless terminals 2,3,4 on the basis of the receiving signal intensity obtained at the receiving intensity measurement unit 14 and the number of times of frame re-transmission conducted by the re-transmission processing control unit 15. Respective communication paths are the communication paths between the wireless control unit 1 and the wireless terminals 2, 3, 4, respectively.

The wireless control unit 1 sets link speeds to each terminal 2, 3, 4 on the basis of the determination results given above at every terminal 2, 3, 4. The link speeds respectively mean the frame transmission speeds of the signals between each wireless terminal 2, 3, 4 and the wireless control unit 1. The wireless control unit 1 associates information indicating speeds appropriate as link speeds for each terminal with identifying information thereof. The wireless control unit 1 stores the associated information into, for example, the inner memory 19. The identifying information of the terminals is, for example, MAC addresses.

For example, if the control unit 1 determines that a condition of the communication path to the wireless terminal 2 is poor, the wireless control unit 1 sets a link speed to a lower speed so as to improve reliability in communication. The wireless control unit 1 varies the link speed, which is set in low as given above, to a higher link speed if the wireless control unit 1 determines that the condition of the communication path to the wireless terminal 2 is improved from the poor state described above.

If the wireless control unit 1 communicates with the wireless terminals 2, 3, 4 in accordance with any current or future communication standard, such as the IEEE 808.11a standard for example, the control unit 1 sets speeds appropriate as link speeds for the wireless terminals 2, 3, 4 at every terminal. The link speeds set by the wireless control unit 1 is any of 6, 9, 12, 18, 24, 36, 48, 54 Mbps including an option rate.

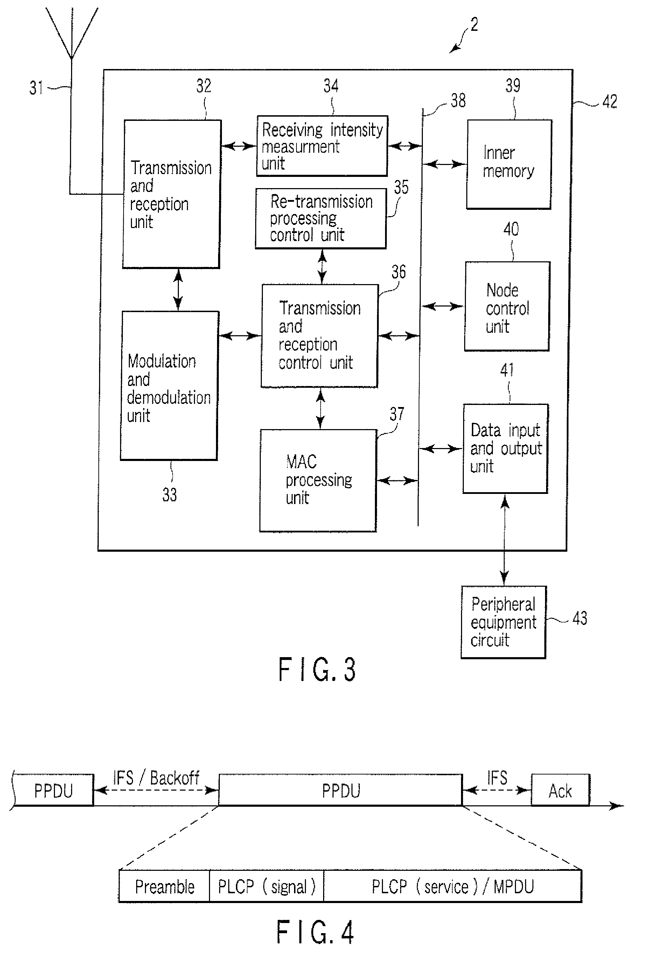

FIG. 3 is the block diagram showing an exemplary configuration example of inner circuitry of the wireless terminal 2. The configurations of the inner circuitry of the wireless terminals 3, 4 are the same in its primary portion as that of the wireless terminal 2.

As shown in FIG. 3, the wireless terminal 2 of the wireless communication system has a wireless LAN module 42 and a peripheral equipment circuit 43.

The wireless LAN module 42 has an antenna 31, a transmission and reception unit 32, a modulation and demodulation unit 33, a receiving intensity measurement unit 34, a re-transmission processing unit 35, a transmission and reception control unit 36, a MAC processing unit 37, an inner bus 38, an inner memory 39, a node control unit 40 and a data input and output unit 41. The input and output unit 41 is coupled to a peripheral equipment circuit 43.

The antenna 31 is the same type as the antenna 11 of the wireless control unit 1 shown in FIG. 2. Likewise, the transmission and reception unit 32, the modulation and the demodulation unit 33, the receiving intensity measurement unit 34, the re-transmission processing control unit 35, the transmission and reception control unit 36, the MAC processing unit 37, the inner bus 38, the inner memory 39, the node control unit 40, and the data input and output unit 41 are corresponding to, and the same type as the transmission and reception unit 12, the modulation and the demodulation unit 13, the receiving intensity measurement unit 14, the re-transmission processing control unit 15, the transmission and reception control unit 16, the MAC processing unit 17, the inner bus 18, the inner memory 19, the node control unit 20, and the data input and output unit 21, respectively.

FIG. 4 is the exemplary diagram showing a frame sequence and a format of a wireless LAN which is IEEE 802.11a in this embodiment.

As shown in FIG. 4, in the frame sequence and the format of the wireless LAN, IEEE 802.11a, it is defined that frame transmission should start after waiting until arbitrary set up time is elapsed after completion of transmission of the frame. The arbitrary set up time means a sum of an inter frame space (also referred to as "IFS") and back off. Then, after completion of the frame transmission, equipment of the receiving partner performs a reception acknowledgement (also referred to as "ACK") when the time corresponding to the IFS elapsed.

The frame to be transmitted here is equivalent to a physical layer convergence protocol (also referred to as "PLCP") protocol data unit (also referred to as "PPDU"). The PPDU comprises a preamble, a PLCP signal part [PLCP (signal)] as well as a PLCP service part [PLCP (service)] and a MAC protocol data unit (collectively referred to as "PLCP(service)/MPDU").

When the transmission speed of the transmission frame is varied, as shown in FIG. 4, the time required to transmit "PLCP (service)/MPDU" is varied. More specifically, the time required to transmit the wireless transmission overhead, inclusive of the time required to transmit the "PLCP (service)/MPDU" of the transmission frame, is lengthened if the transmission speed of the transmission frame is slowed. The variations of the transmission speed of the transmission frame significantly affect a transmission speed for an upper order layer of the communication network.

Next, operations of the wireless communication system configured shown in FIG. 1 will be described.

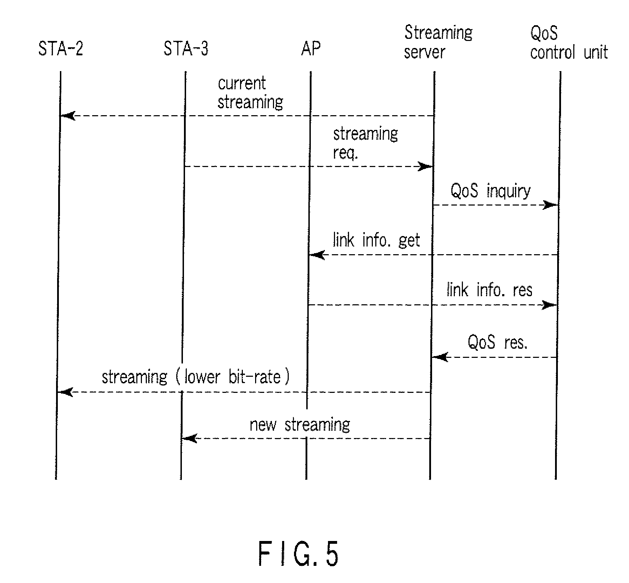

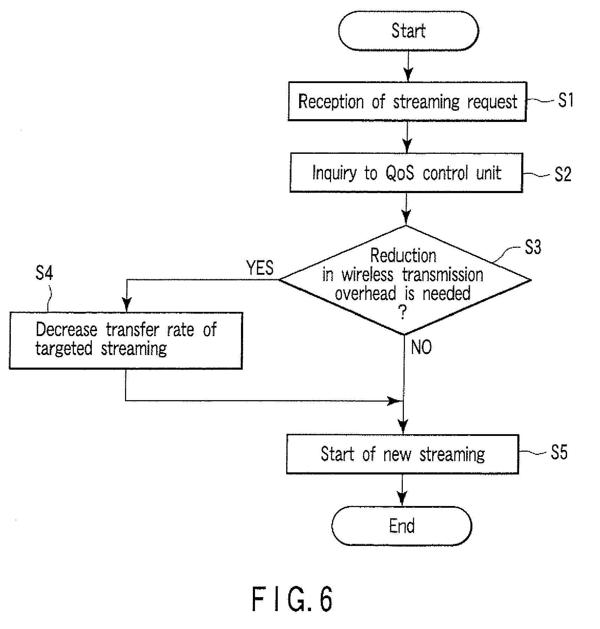

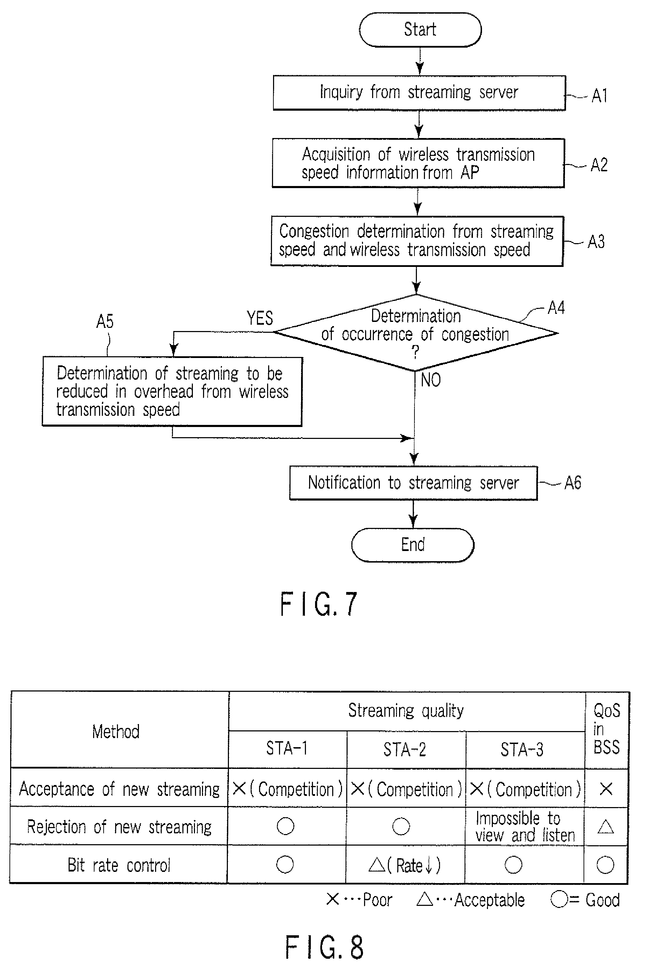

FIG. 5 is the exemplary diagram of input/output form of the streaming data and a variety of signals among each unit of the communication system. FIG. 6 is the flowchart showing the exemplary communication control processing conducted by the streaming server 7. FIG. 7 is the flowchart showing the exemplary communication control processing conducted by the QoS control unit 8.

Here, it is assumed that the wireless terminal 3 (STA-2) issues a delivery request for the streaming data to the streaming server 7 through the wireless control unit 1 and the streaming server 7 delivers the streaming data to the wireless terminal 3 in accordance with this delivery request. It is further assumed that the wireless terminal 1 (STA-1) and the wireless terminal 4 (STA-3) do not issue delivery requests to the streaming server 7. Therefore, the streaming server 7 does not deliver the streaming data to the wireless terminals 2, 4.

Under the condition, it is assumed that the wireless terminal 4 transmits a control signal, which is a new delivery request for the streaming data, to the streaming server 7 through the wireless control unit 1. The streaming server 7 receives this signal (block S1).

The streaming server 7 transmits a control signal to the QoS control unit 8 via the LAN cable 6. This control signal is a QoS inquiry, related to setting of bit rates, namely communication speeds, of the streaming data which is currently delivered from the streaming server 7 to the wireless terminal 3 and streaming data which will be newly delivered from the streaming server 7 to the wireless terminal 4 (block S2).

The QoS inquiry signal includes information indicating the kind of the terminal which is currently receiving the streaming data among the wireless terminals 2, 3, 4 and the bit rates of the streaming data which is delivered thereto, respectively.

When the signal output from the streaming server 7 as shown in block s2 is received (block A1 in FIG. 7), the QoS control unit 8 detects a value of the bit rate of the streaming data which is currently delivered to the wireless terminal 3 from the streaming server 7. The QoS control unit 8 transmits a signal indicating a transmission request, denoted as the "link info. get" request of FIG. 5, for information indicating link speeds between the wireless control unit 1 and each terminal 2, 3, 4.

Upon receiving the "link info. get" transmission request from the QoS control unit 8, the wireless control unit 1 reads out information indicating a first link speed and a second link speed, described later, from the inner memory 19.

The first link speed is a link speed between the wireless terminal 3 (STA-2) which receives the streaming data from the streaming server 7 thereto. The second link speed is a link speed between the wireless terminal 4 (STA-3) which newly issues a delivery request for the streaming data to the streaming server 7. The wireless control unit 1 transmits a signal indicating the read out information, denoted as "link info. res" response signal of FIG. 5, to the QoS control unit 8 via the LAN cable 6.

The QoS control unit 8 receives the "link info. res" response signal from the wireless control unit 1. Then, the QoS control unit 8 acquires information indicating link speed which is included in the received signal and also which is set between the wireless control unit 1 and the wireless terminals 3, 4, respectively (block A2 in FIG. 7).

The QoS control unit 8 determines whether the congestion will occur or not, if the streaming data will be delivered from the streaming server 7 in accordance with the new delivery request, which is denoted as "streaming req." signal of FIG. 5 above mentioned. The determination is based on the information included in the QoS inquiry signal from the streaming server 7 (block A3).

The information in the QoS inquiry signal from the streaming server 7 to the QoS control unit 8 includes information indicating bit rates of each streaming data which is currently delivered to each terminal 2, 3, 4 from the corresponding streaming server 7, respectively. The information included in the signal from the wireless control unit 1 to the QoS control unit 8 is one indicating the link speeds which are set between the wireless control unit 1 and the wireless terminals 3, 4, respectively.

If the QoS control unit 8 determines that the congestion will occur (YES, in block A4), the QoS control unit 8 identifies the kind of terminal which is receiving the streaming data to reduce wireless transmission overhead among each terminal which is currently receiving the streaming data from the streaming server 7 (block A5).

In the case of frame transmission through the wireless LAN, wireless channel occupancy time in the wireless zone 5 is made short by transmitting the frame of the same size by using the communication path having a first link speed, in comparison with the case of the transmission of the frame to be transmitted by using the communication path having a second link speed, where the first link speed is faster than the second link speed. In the case that the channel occupancy time is shorter, the wireless transmission overhead becomes less.

Here, it is assumed that the link speed which is set between the terminal, for example the terminal 2, currently receiving the streaming data from the streaming server 7 and the wireless control unit 1 is slower than the link speed set between the terminal, for example the terminal 4, newly issuing the delivery request to the streaming server 7 and the wireless control unit 1. In such a case, the reduction effect on the wireless transmission overhead under an after-mentioned first condition is higher than the reduction effect on the wireless transmission overhead under the after-mentioned second condition.

The first condition means the case that the bit rate of the streaming data to be delivered to the terminal, for example the terminal 2, which receives the streaming data from the streaming server 7 is slowed down (i.e., reduced).

The second condition means the case that the bit rate of the streaming data to be delivered from the streaming server 7 to the terminal, for example the terminal 3, which receives the streaming data from the streaming server 7 is slowed down. It is assumed that the link speed between the terminal 3 and the wireless control unit 1 is the same as that to be set between the terminal, for example the terminal 4, newly issued a delivery request to the streaming server 7 and the wireless control unit 1. The slow-down rate under the first condition is equivalent to the slow-down rate of the streaming data under the second condition.

Accordingly, the streaming server 7 may deliver the streaming data with the bit rate higher than this slow-down bit rate to the wireless terminal which newly issues the delivery request.

This fact means that the streaming server 7 may deliver the streaming data to the terminal, which newly issues the delivery request for the streaming data, preventing the congestion even if the slow-down rate of the bit rate of the streaming data which delivers to the terminal from the streaming server 7 is slower than the bit rate of the streaming data to be delivered from the streaming server 7 to the terminal which newly issues the delivery request for the streaming data.

Consequently, the QoS of the whole communication network may be improved.

Specifically, the QoS control unit 8 compares the link speed set between the terminal now receiving of the streaming data among the wireless terminals 2, 3, 4 and the wireless control unit 1 with the link speed set between a terminal that newly issues the delivery request of the streaming data to the streaming server 7 and the wireless control unit 1.

The QoS control unit 8 conducts processing described later if, as a result of the foregoing comparison, the link speed which is set between the terminal now in receiving of the streaming data from the streaming server and the wireless control unit 1 is slower than the link speed which is set between the terminal which newly issues the delivery request to the streaming server 7 and the wireless control unit 1.

The processing to be conducted by the QoS control unit 8 means calculation of the slow-down rate of the bit rate of the streaming delivered from the streaming server 7 to the terminal with the foregoing low link speed set thereto as a response, denoted as "QoS res." signal, to the QoS inquiry from the streaming server to the QoS control unit 8.

The value of the slow-down rate is one by which the congestion will not occur even if the streaming server 7 delivers the streaming data in response to the new delivery request, after slowing down the relevant bit rate.

As mentioned above, the QoS control unit 8 outputs, to the streaming server 7, a signal including information indicating the kind of the terminal of the receiving partner for the slow-down rate calculated as described above and the streaming data being a reduction target of the bit rate by this slow-down rate (block A6).

In contrast, if "No" in the block A4, the QoS control unit 8 considers that there is no terminal to reduce wireless transmission overheads among each terminal now in receiving the streaming data from the streaming server 7 and outputs a signal to instruct the maintenance of the bit rate of the streaming data now in delivery from the streaming server 7 (block A4 to A6).

Wherein, the streaming server 7 takes into consideration the case (Yes, in block S3) that, at receiving the signal output from the QoS control unit 8 resulting from the processing in the block A6, the signal is one to instruct the slow-down of the bit rate of the streaming data and instruct the kind of the terminal of the streaming data being a target of the slow-down of the bit rate.

In this case, the streaming server 7 reduces the bit rate of the streaming data delivered to the terminal to be slowed down the bit rate as mentioned above among the wireless terminals 2, 3, 4 by the slow-down rate indicated by the signal from the QoS control unit 8, on the basis of information included in the signal from the QoS control unit 8 (block S4).

Then, the streaming server 7 starts delivery of the streaming data, new streaming data, to the terminal which newly issues the delivery request for the streaming data among the wireless terminals 2, 3, 4 (block S5).

In contrast, if the streaming server 7 determines "No" at the processing in the block S3, the streaming server 7 starts the delivery of the streaming data to the terminal which newly issues the foregoing delivery request. However, the streaming server 7 reduces the bit rate of the newly delivered streaming data so that congestion will not occur.

FIG. 8 is the exemplary table showing the streaming quality in response to each treatment method when the communication terminal issues the delivery request for the streaming data to the streaming server 7.

The table shows that delivery processing of the streaming data to each terminal including the wireless terminal 4 (STA-3) causes competition by a lack of transmission band in the whole of the communication network when the third and fourth conditions are satisfied, as described later.

The third condition means the case that the wireless terminal 4 (STA-3) issues a new delivery request for the streaming data to the streaming server 7 while the streaming server 7 delivers the streaming data to the wireless terminal 2 (STA-1) and the wireless terminal 3 (STA-2). The fourth condition means the case that the streaming server 7 accepts the delivery request as it is. As a result, the QoS in the BSS is decreased.

The table also shows that if the wireless terminal 4 (STA-3) newly issues the delivery request for the streaming data to the streaming server 7 and also if the streaming server 7 does not newly deliver the streaming data, the streaming server 7 continues the delivery of the streaming data to the wireless terminals 2 (STA-1) and 3 (STA-2).

However, the streaming server 7 does not deliver any streaming data to the wireless terminal 4 (STA-3). As a result, the QoS in the BSS is improved in comparison with the fourth condition where the streaming server 7 accepts the new delivery request as it is. However, as a part of users cannot receive the streaming data, the certain user may not be satisfied.

The table in FIG. 8 further shows that when the streaming server 7 receives the new delivery request for the streaming data from the wireless terminal 4 (STA-3), the congestion is not caused even when the streaming server 7 newly delivers the streaming data to the wireless terminal 4 (STA-3) by decreasing the bit rate of the streaming data, as described later. The streaming data to be a target of slow-down of the bit rate is the streaming data which is delivered to the wireless terminal 3 (STA-2) among the streaming data which is delivered to the wireless terminals 2 (STA-1) and 3 (STA-2) from the streaming server 7.

Consequently, the competition of the delivery processing from the streaming server 7 for the streaming data to each terminal including the wireless terminal 4 (STA-3) does not occur.

As a result, all users may normally view and listen the streaming data. That is, in this case, the QoS is higher than that of in if the streaming server 7 accepts or rejects the new delivery request for the streaming data as it is.

As described above, in the wireless communication system according to this embodiment, if the fifth and sixth conditions are satisfied, the QoS control unit 8 decreases the bit rate of the streaming data to be delivered from the streaming server 7 to the terminal to which a speed lower than the link speed between the wireless control unit 1 and the terminal being a delivery target of the streaming data corresponding to the new request is set as a link speed between the wireless control unit 1 among the wireless terminals 2, 3, 4.

The fifth condition means the case that any of the wireless terminals 2, 3, 4 issues the new delivery request for the streaming data to the streaming server 7. The sixth condition means the case that the QoS control unit 8 determines that the congestion will occur if the streaming data will be delivered from the streaming server 7 in response to the new request for the streaming data.

The QoS control unit 8 instructs to the streaming sever 7 to start this delivery to the terminal that newly issues the delivery request for the streaming data.

Accordingly, the user of the terminal with the streaming data delivered thereto and also the user of the terminal with the new delivery request for the streaming data issues thereby may view and listen the streaming data, even if the communication network is lack of the transmission band, when the streaming server 7 newly delivers the streaming data. That is, delay time regarding the delivery of the streaming data from the streaming server 7 may be shortened and also the data throughput is improved.

The embodiment described above is configured to individually mount the streaming server 7 and the QoS control unit 8 in the different housings, however, the embodiment is not limited such a configuration and preferably configured to mount the streaming server 7 and the QoS control unit 8 in the same housing.

Furthermore, the stream server 7 and the QoS control unit 8 may be located in the housing of the wireless control unit 1.

In the event of satisfaction of seventh and eight conditions described below, the QoS control unit 8 decreases the bit rate of the streaming data to be delivered from the streaming server 7 to a terminal having the slowest link speed between the wireless control unit 1 among communication terminals 2, 3, 4 which receives the streaming data so that the congestion if the streaming data will be delivered from the streaming server 7 in response to the new delivery request will not occur.

The seventh condition is the case that terminals receive deliveries of the streaming data from the streaming server 7 when the streaming server 7 receives the new delivery request for the streaming data. The eighth condition is the case that the QoS control unit 8 determines that the congestion will occur when the new delivery request for the streaming data is allowed by the streaming server 7.

For these conditions, the QoS control unit 8 may calculate the slow-down rate so that the value of the bit rate, after the completion of this slow-down, becomes the prescribed value, when the QoS slows down the bit rate of the streaming data to be delivered from the streaming server 7 to the terminal with the foregoing lowest link speed set thereto.

This prescribed value is the value, for example, at least needed to match the viewing and listening by the user. The value given above may be set to an arbitrary value resulting from the operations of the wireless terminal to be a receiving destination of the streaming data.

However, there is a possibility that terminals receives the deliveries of the streaming data from the streaming server 7, and the QoS control unit 8 likely determines that the congestion will occur if the streaming data will be delivered from the streaming server 7 in response to the new delivery request even if the bit rate of the streaming data to be delivered from the streaming server 7 to the terminal with the most low link speed set up thereto is slowed down up to the foregoing prescribed value.

In this case, the QoS control unit 8 may further instruct to the streaming server 7 the fact that the bit rates of the streaming data to be delivered to the terminals other than the terminals with the foregoing lowest bit rate set up thereto among the terminals which receives the streaming data from the streaming server 7 so that the congestion will not occur when the QoS control unit 8 accepts the new delivery request for the streaming data.

If terminals which receives the deliveries of the streaming data from the streaming server 7 when any terminal newly issues the delivery request for the streaming data to the streaming server 7, the QoS control unit 8 likely determines that the congestion will occur if the streaming data will be delivered from the streaming server 7 in response to the new delivery request even if the bit rates of the streaming data to be respectively delivered from the streaming server 7 to all terminals are decreased up to the forgoing prescribed value.

When any terminal issues the new delivery request for the streaming data to the streaming server 7, if on terminal which is delivered the streaming data from the streaming server 7, the QoS control unit 8 likely determines that the congestion if the steaming data will be delivered from the streaming server 7 according to the new delivery request even if the bit rate of the streaming data to be delivered to the terminal from the streaming server 7 is decreased up to the foregoing prescribed value.

In these cases, the QoS control unit 8 only to further instruct to the streaming server so as to slow down the bit rate of the streaming data to will be newly delivered therefrom so that occurrence of the congestion will be prevented when the QoS control unit 8 accepts the new delivery request for the streaming data.

As a first modified embodiment of the system stated above, the wireless terminal at the receiving destination may output a signal indicating the fact of a requirement to prohibit the slow-down of the bit rate of the streaming data to be received from the streaming server 7 when the user operates the wireless terminal to be the receiving destination.

When receiving the signal indicating the requirement to prohibit the slow-down of the bit rate of the streaming data, the QoS control unit 8 omits the streaming data to be delivered from the streaming server 7 to the terminal being the terminal of the transmission origin of this signal.

As for a second modified embodiment of the system described above, when the terminal at the receiving destination of the streaming data is under video recording processing of the streaming data, the wireless terminal at the receiving destination may output the signal indicating the requirement to prohibit the slow-down of the bit rate of the streaming data to the QoS control unit 8.

Wherein, the terminal under the video recording processing of the streaming data from the streaming server 7 transmits identifying information indicating that the streaming data, which is currently received by the relevant terminal, is the data being the object of video recording to the streaming server 7 through the wireless control unit 1. When receiving this identifying information, the streaming server 7 stores it together with the identifying information of the terminal of the transmission origin into a memory (not shown).

When receiving the new delivery request for the streaming data, the streaming server 7 outputs the foregoing identifying information to the QoS control unit 8. The QoS control unit 8 omits the bit rate of the streaming data to be delivered to the terminal of the transmission origin of the identifying information input from the streaming server 7 from the target of the slow-down, or restricts the slow-down rate for the relevant bit rate.

In the embodiment described above, if the invention is described operating in compliance with a specific wireless LAN standard (e.g., IEEE 802.11). However, it is contemplated that the invention is not limited to such a case, and may be utilized with other current, future, revised or specific wireless LAN standards such as IEEE 802.11a, IEEE 802.11b, IEEE 802.11g, HyperLAN/x, and the like.

In the embodiment, the congestion is detected on the basis of the information indicating the bit rate of streaming data and the link speeds of wireless communication path. However, the method for detecting congestion is not limited to this embodiment, data to be used are freely selected. Also, as the device may not detect whether or not congestion will be occurred, in the case that the selected data satisfies a certain condition or a certain combination, the slow-down may be performed.

## Claims

1. A communication system, **characterized by** comprising:
a server (7) to deliver streaming data;
a relay unit (1) to relay the streaming data delivered from the server (7);
a plurality of wireless communication terminals (2, 3, 4) adapted to receive the streaming data from the relay unit (1), the plurality of wireless communication terminals including a first wireless communication terminal (3) and a second wireless communication terminal (4); and
a control unit (8) to detect that the delivery of the streaming data to the second wireless communication terminal (4) causes congestion in response to the second communication terminal (4) transmitting a request for the streaming data while the first wireless communication terminal (3) is receiving the streaming data, and to reduce a bit rate of the streaming data to be delivered to the first wireless communication terminal (3) when the congestion is caused by the delivery to the second wireless communication terminal (4) and a link speed between the relay unit (1) and the first wireless communication terminal (3) is slower than that between the relay unit (1) and the second wireless communication terminal (4).

2. A communication system according to claim 1, **characterized in that** the control unit (8) receives information to detect the congestion, the information including information pertaining to a bit rate of the streaming data delivered by the server (7), information pertaining to the link speed between the relay unit (1) and the first wireless communication terminal (3), and information pertaining to the link speed between the relay unit (1) and the second wireless communication terminal (4).

3. A communication system according to claim 1, **characterized by** further comprising a third wireless communication terminal (2) to receive the streaming data from the relay unit (1), **characterized in that** the control unit (8) detects, in the case that the second wireless communication terminal (4) requests for the streaming data while both the first wireless communication terminal (3) and the third wireless communication terminal (2) receive the streaming data, to detect that the delivery of the streaming data to the second wireless communication terminal (4) causes congestion, and to reduce a bit rate of the streaming data to be delivered to the third wireless communication terminal (2) when the congestion is caused by the delivery of the streaming data to the second wireless communication terminal (4) and when a link speed between the relay unit (1) and the third wireless communication terminal (2) is slower than the link speed between the relay unit (1) and the first wireless communication terminal (3) and the link speed between the relay unit (1) and the second wireless communication terminal (4).

4. A communication system according to claim 3, **characterized in that** the control unit (8) reduces the bit rate of the streaming data to be delivered to the first wireless communication terminal (3) when the control unit (8) detects that the delivery of the streaming data to the second wireless communication terminal (4) causes congestion even if the bit rate of the streaming data delivered to the third wireless communication terminal (2) is reduced.

5. A communication system according to claim 1, **characterized in that** the control unit (8) reduces the bit rate of the streaming date to be delivered to the second wireless communication terminal (4) when the control unit (8) detects that the delivery of the streaming data to the second terminal causes the congestion even if the bit rate to the first wireless communication terminal (3) is reduced to a predetermined level.

6. A communication system according to claim 1, **characterized in that** the communications between the relay unit (1) and the first wireless communication terminal (3) and between the relay unit (1) and the second wireless communication terminal (4) are performed through a wireless LAN.

7. A communication system according to claim 1, **characterized in that** the communication between the server (7) and the relay unit (1) is performed through a wired LAN.

8. A communication system according to claim 1, **characterized in that** the streaming data is at least one of audio data and video data.

9. A communication system according to claim 1, **characterized in that** the relay unit (1) communicates with the first wireless communication terminal (3) and the second wireless communication terminal (4) in multistep bit rates in response to a communication condition.

10. A communication system according to claim 1, **characterized in that** the control unit (8) determines whether each the first wireless communication terminal (3) and the second wireless communication terminal (4) permits a reduction of the bit rate of the streaming data to be delivered, and removes one or more terminals of the plurality of wireless communication terminals determined not to allow the reduction of the bit rate from one or more terminals of the plurality of wireless communication terminals that allow the reduction of the bit rate.
